# EUROPÄISCHE PATENTANMELDUNG

(11) **EP 0 983 971 A2**
(43) Veröffentlichungstag der Anmeldung: **08.03.2000**
(21) Anmeldenummer: 99114687.9
(22) Anmeldetag: 27.07.1999
(51) Int. Cl.: C03B 29/06

(54) **Feuerpolieren von Modulen**

(30) Priorität: 31.08.1998 DE 19839563
(71) Anmelder: W.Lindner Maschinen GmbH, 94481 Grafenau-Reismühle (DE)
(72) Erfinder: Lindner, Walter, 94518 Spiegelau (DE)
(74) Vertreter: Manitz, Finsterwald & Partner

(57) **Zusammenfassung**

Erfindungsgemäß wird eine Vorrichtung und ein Verfahren zum Feuerpolieren von Glasartikeln vorgeschlagen, bei der eine Mehrzahl von Brennern vorgesehen ist, die auf den Glasartikel gerichtet sind und gleichzeitig zum Feuerpolieren des Glasartikels betrieben werden. Vorzugsweise ist die Mehrzahl von Brennern in mindestens einem Modul oder einer Modulkombination vorgesehen, in das mindestens ein Glasartikel gegeben werden kann, wobei insbesondere jedes Modul bzw. jede Modulkombination zwei Stationen für je einen Glasartikel aufweisen kann. Es wird bevorzugt, daß die Vorrichtung eine Mehrzahl von Modulen oder Modulkombinatio-. nen aufweist, wobei dann jedes Modul bzw. jede Modulkombination eine Mehrzahl von Brennern zum Feuerpolieren eines Glasartikels umfaßt.

## Beschreibung

Die vorliegende Erfindung betrifft die Glasbearbeitung und insbesondere den Vorgang des Feuerpolierens.

Um Glasartikeln eine besonders schöne glatte Oberfläche verleihen zu können, ist es üblich, diese Oberfläche mittels "Feuerpolieren" zu behandeln. Dabei wird die Oberfläche des Glasartikels mit geeigneten Brennern so stark aufgeheizt, daß das Glasmaterial an der Oberfläche in einer dünnen Schicht zu schmelzen beginnt, wodurch ein Glättungseffekt erreicht wird.

Bei üblichen Feuerpolier-Vorgängen gemäß dem Stand der Technik befinden sich die Glasartikel auf Drehtellern, die ihrerseits auf Rundtisch- oder Ketten-Längsmaschinen kontinuierlich oder intermittierend weitertransportiert werden. Hierbei wird ein Brenner lediglich von einer Seite auf den Glasartikel gerichtet, wobei der Glasartikel gedreht wird, um auf diese Weise zu erreichen, daß nach und nach die gesamte Oberfläche erhitzt wird.

Hier tritt auf nachteilige Weise ein hoher Energieverlust auf, da sich diejenigen Oberflächenbereiche, die sich nicht im Brennerbereich befinden, wieder abkühlen und dann wieder neu aufgeheizt werden müssen, wenn sie erneut in den Bereich des Brenners gelangen. Zudem ist das Vorsehen eines oder mehrerer Drehteller, auf denen der Glasartikel gedreht wird, mit hohem mechanischen Aufwand verbunden.

Ein weiterer Nachteil der derzeit zum Feuerpolieren verwendeten Maschinen ergibt sich daraus, daß diese - sofern sie mit mehreren Stationen arbeiten - immer eine feste Anzahl von seriell nacheinander angeordneten Stationen aufweisen, wobei die Stationenanzahl für die höchste Produktionsgeschwindigkeit und die längste Polierdauer ausgelegt sein muß. Da die Anzahl der Stationen somit nicht individuell auf den jeweils zu polierenden Artikel sowie auf die jeweilige Taktzeit einer vorgelagerten Produktionsanlage eingestellt werden kann, ist in der Regel keine optimale Einstellung der Prozeßparameter möglich. Bei langen Taktzeiten z.B. ist ein Artikel schon nach dem Durchlauf weniger Stationen vollständig poliert und muß dann in den Folgestationen unter Verschwendung von Energie auf einer bestimmten Temperatur gehalten werden. Wird in einem anderen Fall aufgrund eines Wechsels der vorgelagerten Maschine oder durch Änderung des Artikelspektrums eine deutliche Änderung des Kapazitätsbedarfs erforderlich, so ist bei bekannten Maschinen wegen der festen Stationenanzahl eine Anpassung nur bedingt möglich.

Es ist daher eine Aufgabe der vorliegenden Erfindung, eine Vorrichtung und ein Verfahren vorzusehen, die bzw. das den Feuerpolier-Vorgang optimiert, und zwar hinsichtlich des Energieverbrauchs, der Flexibilität als auch hinsichtlich des zu betreibenden mechanischen Aufwands.

Diese Aufgabe wird durch eine Vorrichtung gemäß Anspruch 1 sowie ein Verfahren gemäß Anspruch 8 gelöst. Bevorzugte Ausgestaltungen der Erfindung ergeben sich aus den Unteransprüchen.

Insbesondere wird erfindungsgemäß eine Vorrichtung zum Feuerpolieren von Glasartikeln vorgeschlagen, bei der eine Mehrzahl von Brennern vorgesehen ist, die auf einen Glasartikel gerichtet sind und gleichzeitig zum Feuerpolieren des Glasartikels betrieben werden. Dadurch ist z.B. ein Drehen des Glasartikels nicht mehr nötig, und es können große Zeit- und Energie-Einsparungen beim Feuerpolier-Vorgang erreicht werden. Erfindungsgemäß können die Glasartikel aber auch gedreht werden, um z.B. eine besonders gleichmäßige Bearbeitung durch die Brenner zu erzielen.

Vorzugsweise ist die Mehrzahl von Brennern in mindestens einem Modul vorgesehen, in dem mindestens ein Glasartikel bearbeitet werden kann. Bevorzugt ist es jedoch, wenn Modulkombinationen mit jeweils zwei Stationen für je einen Glasartikel zum Einsatz kommen.

Es ist von Vorteil, wenn die Vorrichtung eine Mehrzahl von Modulen oder Modulkombinationen aufweist, wobei dann jedes Modul bzw. jede Modulkombination wiederum eine Mehrzahl von Brennern zum Feuerpolieren eines Glasartikels umfaßt. Von besonderem Vorteil ist es, wenn die Module oder Modulkombinationen parallel angeordnet sind, so daß nicht wie beim Stand der Technik jeder Artikel zwangsläufig alle Module oder Modulkombinationen durchlaufen muß. Hierdurch ergibt sich eine wesentliche Erhöhung der Flexibilität, da z.B. alle Module oder Modulkombinationen mit voneinander abweichenden Parametern betrieben werden können. Zudem ist es möglich, mehrere Module oder Modulkombinationen gleichzeitig mit direkt von einer Produktionsmaschine kommenden Glasartikeln zu bestücken, wobei wiederum eine erhöhte Flexibilität dadurch erreicht wird, daß zwar alle Module oder Modulkombinationen gleichzeitig zum Einsatz kommen können, jedoch nicht müssen.

Besonders vorteilhaft ist es, wenn ein Transportband vorgesehen ist, um einen Glasartikel zu Modulen oder Modulkombinationen zu befördern, und wenn ein weiteres Transportband zum Abtransport der feuerpolierten Glasartikel vorgesehen ist. Dadurch läßt sich eine Automatisierung des gesamten Vorgangs und eine weitere Rationalisierung erreichen.

In einer besonders bevorzugten Ausführungsform der Erfindung ist eine Transporteinrichtung mit mehreren jeweils zur Aufnahme zumindest eines Glasartikels dienenden Plätzen vorgesehen, die nacheinander in den Wirkungsbereich der Brenner bringbar sind. Mit einer derartigen Transporteinrichtung ist es möglich, die Glasartikel nacheinander mit der Mehrzahl von Brennern zu bearbeiten, wobei mit dem Feuerpolieren eines Glasartikels begonnen werden kann, sobald der vorherige Glasartikel den Wirkungsbereich der Brenner verlassen hat. Während die feuerpolierten Glasartikel abkühlen bzw. abgekühlt werden, können bereits die nächsten Glasartikel bearbeitet werden. Die Abkühlzeit der Glasartikel ist somit keine den Gesamtprozeß unnötig verlängernde Totzeit. Insbesondere bei hohen Stückzahlen können die Brenner dabei ununterbrochen betrieben werden. Wenn z.B. wie bei geringen Stückzahlen die Zykluszeit zwischen dem Zuführen zweier aufeinanderfolgender Glasartikel in den Wirkungsbereich der Brenner länger als die Feuerpolierzeit ist, dann können die Brenner auch vorübergehend abgeschaltet werden.

Die Transporteinrichtung kann als Drehteller oder sogenannter Rundschaltteller ausgebildet sein, bei dem die zur Aufnahme der Glasartikel dienenden Plätze auf einem Kreis angeordnet sind. Die Transporteinrichtung bzw. dessen zur Aufnahme der Glasartikel dienenden Plätze können dabei derart ausgeführt sein, daß die Glasartikel zusätzlich um ihre eigene Achse gedreht werden können.

In einer besonders bevorzugten Variante sind mehrere parallel angeordnete und somit gleichzeitig mit zu bearbeitenden Glasartikeln beschickbare Module oder Modulkombinationen vorgesehen, wobei jedes Modul bzw. jede Modulkombination zwei von den Glasartikeln nacheinander zu durchlaufende Stationen aufweist. Jede Station umfaßt eine der vorstehend erwähnten Transporteinrichtungen, wobei zwischen den Transporteinrichtungen eine Umsetzeinrichtung vorgesehen ist, mit der die Glasartikel der einen Station entnommen und der anderen Station übergeben werden können.

Mit einer derartigen Vorrichtung ist es möglich, nacheinander unterschiedliche Bereiche der Glasartikel zu bearbeiten, wobei jedoch keinerlei Zeitverluste entstehen, da die an jeder der Stationen vorgesehene Transporteinrichtung jeweils ein nicht durch Abkühlzeiten unterbrochenes Feuerpolieren der Glasartikel gestattet.

Entsprechend ist auch ein Verfahren zum Feuerpolieren von Glasartikeln vorgesehen, wobei das Verfahren die folgenden Schritte aufweist:
- Befördern eines Glasartikels zu einer Mehrzahl von Brennern, die alle auf den Glasartikel gerichtet sind, wenn der Glasartikel eine vorbestimmte Position zwischen den Brennern erreicht hat;
- gleichzeitiges Drehen des Artikels und Betreiben der Brenner, um ein schnelles und gleichmäßiges Feuerpolieren des Glasartikels zu erreichen;
- Befördern des Glasartikels weg von der Mehrzahl von Brennern.

Wenn mehrere Glasartikel gleichzeitig feuerpoliert werden sollen, weist das Verfahren die folgenden Schritte auf:
- Gleichzeitiges oder zeitlich versetztes Befördern mehrerer Glasartikel jeweils zu einer Mehrzahl von Brennern, die auf den jeweiligen Glasartikel gerichtet sind, wobei die Brenner in parallel angeordneten Modulen oder Modulkombinationen vorgesehen sind;
- wenn die Glasartikel eine vorbestimmte Position zwischen den ihnen jeweils zugeordneten Brennern erreicht haben, gleichzeitiges Betreiben aller Brenner, um das gleichzeitige Feuerpolieren der Glasartikel zu erreichen;
- Befördern der Glasartikel weg von den Brennern.

Dabei wird bevorzugt eine Mehrzahl von Brennern in jeweils mehreren Modulen oder Modulkombinationen vorgesehen, in welche jeweils mindestens ein Glasartikel gegeben werden kann, wobei das Feuerpolieren mehrerer Glasartikel in den mehreren Modulen oder Modulkombinationen gleichzeitig stattfindet. Insbesondere können in diesem Fall mehrere oder alle parallel angeordnete Module bzw. Modulkombinationen gleichzeitig bestückt und/oder gleichzeitig entladen werden. Es ist jedoch ebenso möglich, das Bestücken und/oder Entladen zeitlich nacheinander vorzunehmen.

Vorzugsweise werden zwei Glasartikel gleichzeitig in zwei Stationen einer Modulkombination feuerpoliert, wobei dann beispielsweise in der ersten Station die äußere Mantelfläche eines Glasartikels sowie der obere Randbereich feuerpoliert werden, während in der zweiten Station die Bodenfläche des - zuvor in der ersten Station bearbeiteten - anderen Glasartikels feuerpoliert wird.

Alternativ dazu ist es auch möglich, den Glasartikel umgedreht auf ein z. B. pilzförmiges Element aufzustecken, so daß dann alle betreffenden Bereiche eines Glasartikels gleichzeitig in einer einzelnen Station feuerpoliert werden können.

Eine weitere Alternative besteht z.B. darin, in der ersten Station die Innenseite sowie den oberen Bereich feuerzupolieren und in der zweiten Station die Bodenfläche und die äußere Mantelfläche des Glasartikels feuerzupolieren. Mit der gewählten Anordnung ist es problemlos möglich, den Artikel beim Feuerpolieren der äußeren Mantelfläche gleichzeitig innen und beim Feuerpolieren der Innenfläche außen zu kühlen und dadurch eine Deformation des Glasartikels durch ein durchgreifendes Aufheizen und Erweichen zu verhindern. Das Kühlen erfolgt dabei vorzugsweise durch Einleiten von oder Anblasen mit Gebläseluft.

Weiterhin ist es möglich, ein intensives Abkühlen der zuvor aufgeheizten und dadurch feuerpolierten Oberflächenschicht des Glasartikels nach dem Abschalten der Brenner vorzunehmen. Hierdurch wird die Zykluszeit pro Artikel reduziert und eine durchgreifende Erwärmung des Artikels mit seinen nachteiligen Folgen vermieden.

Ein wesentlicher Vorteil der Erfindung besteht zum einen im erniedrigten Energieverbrauch, da das Glas während des Feuerpolierens ständig von Flammen umhüllt ist und sich nicht abkühlen kann. Ein weiterer Vorteil besteht in der einfacheren mechanischen Technologie, da das Glas während des Feuerpolierens stationär steht und nicht linear vorwärts transportiert werden muß. Jeglicher Transport des Glasartikels während des Feuerpoliervorgangs kann somit unterbleiben. Bei bestimmten Anforderungen kann es sinnvoll sein, auch bei einer erfindungsgemäßen Anordnung ein Drehen des Glasartikels während des Feuerpolierens vorzusehen, um hierdurch z.B. einen noch gleichmäßigeren Feuerpoliervorgang zu erreichen.

Durch die erfindungsgemäße Bearbeitung eines kompletten Artikels innerhalb nur eines Moduls bzw. einer Modulkombination sowie durch die erfindungsgemäß vorgesehene parallele Anordnung von Modulen und Modulkombinationen kann die Produktionskapazität jederzeit durch Zugabe oder Wegnahme von Modulen bzw. Modulkombinationen optimal an die jeweiligen Anforderungen angepaßt werden. Da die Brenner-Einschaltzeit, welche für einen Feuerpoliervorgang benötigt wird, in jedem Fall kleiner als die Zykluszeit der Gesamtproduktion ist, ergeben sich deutliche Energieeinsparungen.

In einem besonders bevorzugten Ausführungsbeispiel des erfindungsgemäßen Verfahrens wird jeder Glasartikel zumindest im wesentlichen unmittelbar nach Ablauf einer vorbestimmten Feuerpolierzeit aus dem Wirkungsbereich der Brenner heraus und gleichzeitig der nächste Glasartikel in den Wirkungsbereich der Brenner hineinbewegt. Bevorzugt werden dabei die Brenner ununterbrochen betrieben. Unnötige Unterbrechungen des Feuerpolierens zum Abkühlen fertig feuerpolierter Glasartikel werden auf diese Weise vermieden.

Weitere Vorteile, Ziele und Einzelheiten der Erfindung ergeben sich aus der folgenden Beschreibung von bevorzugten Ausführungsbeispielen anhand der Zeichnung. In dieser zeigt:
- Fig. 1: eine Vorrichtung gemäß einer Ausführungsform der Erfindung, und
- Fig. 2: eine Vorrichtung gemäß einer weiteren Ausführungsform der Erfindung.

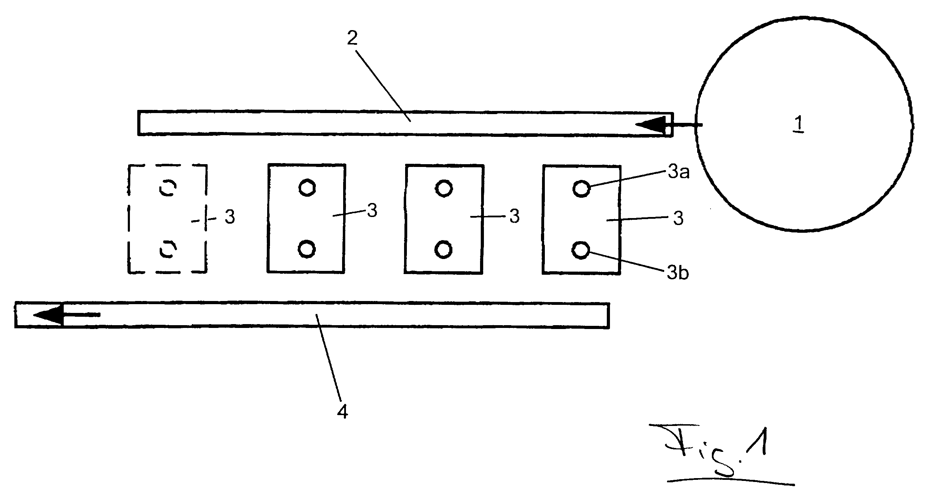

In der Fig. 1 ist schematisch eine erfindungsgemäße Vorrichtung zum Feuerpolieren von Glasartikeln gezeigt. Ein Rundtisch-Glaspreßautomat 1 ist so neben einem ersten Transportband 2 angeordnet, daß gepreßte Glasartikel von dem Rundtisch-Glaspreßautomat 1 zum Weitertransport auf dem kontinuierlich oder intermittierend laufenden Transportband 2 abgelegt werden. Das Transportband 2 befördert die Glasartikel sodann zu mindestens einer Feuerpolier-Modulkombination 3. Vorzugsweise sind eine Mehrzahl von parallel angeordneten Modulkombinationen 3 vorgesehen. In der Zeichnung sind drei Modulkombinationen 3 dargestellt, und eine vierte Modulkombination ist durch Strichlinien angedeutet. Die durch Strichlinien angedeutete vierte Modulkombination verdeutlicht, daß es bei der erfindungsgemäßen parallelen Anordnung von Modulkombinationen sehr einfach ist, je nach erforderlicher Produktionskapazität einzelne Modulkombinationen hinzuzufügen oder wegzunehmen.

In jeder Modulkombination 3 sind Brenner aus verschiedenen Richtungen auf einen darin befindlichen Glasartikel gerichtet, so daß eine Drehung des Glasartikels zum vollständigen Feuerpolieren nicht mehr unbedingt erforderlich ist.

Boden-, Mantel- und Randfläche können nicht gleichzeitig feuerpoliert werden, wenn der Artikel beispielsweise auf seinem Boden steht. Deshalb werden in jeder Modulkombination 3 vorzugsweise zwei Stationen verwendet, wobei in jeder Station mehrere Brenner auf einen Glasartikel gerichtet sind. Jede in Fig. 1 gezeigte Modulkombination 3 weist somit zwei Stationen 3a, 3b auf, wobei in der ersten Station 3a beispielsweise die äußere Mantelfläche eines Glasartikels sowie der obere Randbereich feuerpoliert werden kann, während in der zweiten Station 3b die Bodenfläche feuerpoliert wird.

Es wäre beispielsweise auch möglich, den Artikel umgedreht auf einen Pilz aufzustecken, so daß dann alle betreffenden Bereiche gleichzeitig feuerpoliert werden können und nur eine Station bzw. nur ein Modul erforderlich wäre. Um die Flexibilität der Anlage zum Feuerpolieren eines möglichst großen Produktsprektrums nicht einzuschränken, wird jedoch die Vorsehung von zwei Stationen pro Modulkombination bevorzugt.

Der Vorgang des Feuerpolierens unter Verwendung mehrerer Brenner dauert nur wenige Sekunden, so daß hier eine deutliche Rationalisierung ermöglicht wird.

Die Modulkombinationen 3 können gleichzeitig mit Glasartikeln bestückt werden, woraufhin dann das Feuerpolieren in allen Modulkombinationen gleichzeitig bzw. parallel stattfindet. Dies ergibt eine weitere Rationalisierung und Beschleunigung der Feuerpolier-Stufe.
Nach dem Feuerpolieren werden die Glasartikel - ggf. ebenfalls parallel - auf ein zweites Förderband 4 gegeben, das die feuerpolierten Glasartikel beispielsweise zu einer Kühlbahn befördert.

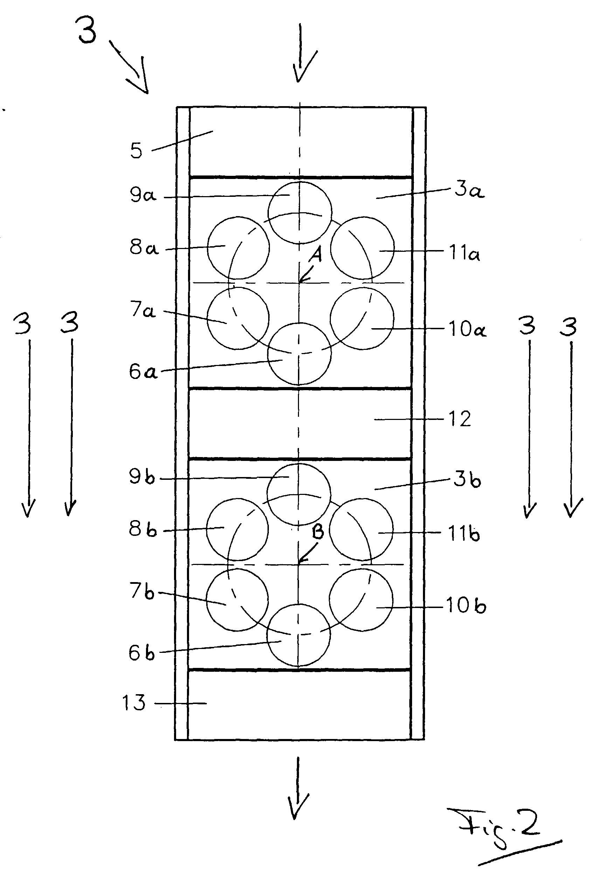

In Fig. 2, die eine besonders bevorzugte Ausführungsform der Erfindung zeigt, ist eine Modulkombination 3 dargestellt. Entsprechend der Ausführungsform von Fig. 1 kann auch die Vorrichtung von Fig. 2 eine Vielzahl von parallel angeordneten, vorzugsweise baugleichen Modulkombinationen 3 aufweisen. Dies ist in Fig. 2 durch die links und rechts neben der dargestellten Modulkombination 3 gezeichneten Pfeile angedeutet.

Die parallel angeordneten Modulkombinationen können beispielsweise entsprechend der Ausführungsform von Fig. 1 über ein Förderband mit Glasartikeln beschickt werden. Die Beschickung kann beispielsweise derart erfolgen, daß den Modulkombinationen 3 gleichzeitig jeweils ein zu bearbeitender Glasartikel zugeführt wird.

Die Modulkombination 3 weist eine Beladeeinrichtung 5 auf, der beispielsweise die zu bearbeitenden Glasartikel von dem erwähnten Förderband übergeben werden können. Die Beladeeinrichtung 5 dient dazu, die Glasartikel einer an einer ersten Station 3a angeordneten Transporteinrichtung zuzuführen, die als um eine Achse A drehbarer Rundschaltteller ausgebildet ist. Der Rundschaltteller weist in diesem Ausführungsbeispiel sechs Plätze 6a - 11a auf, die auf einem Kreis um die Achse A angeordnet und jeweils zur Aufnahme eines Glasartikels ausgebildet sind.

In der Stellung gemäß Fig. 2 kann mit der Beladeeinrichtung 5 ein Glasartikel dem Platz 9a des Rundschalttellers zugeführt werden. Eine Mehrzahl von nicht dargestellten Brennern ist in der Station 3a derart angeordnet, daß die Brenner aus verschiedenen Richtungen auf einen am Platz 9a der Transporteinrichtung befindlichen Glasartikel gerichtet sind und eine Drehung des Glasartikels zum vollständigen Feuerpolieren nicht unbedingt erforderlich ist. Jedoch kann die Transporteinrichtung derart ausgeführt sein, daß die Glasartikel zumindest dann, wenn sich der jeweilige Platz im Wirkungsbereich der Brenner befindet - in der Stellung gemäß Fig. 2 also der Patz 9a -, um ihre eigene Achse gedreht werden können, um auf diese Weise einen noch gleichmäßigeren Feuerpoliervorgang zu erreichen.

Die Modulkombination 3 umfaßt eine weitere Station 3b, die ebenfalls mit einer sechs Plätze 6b - 11b aufweisenden Transporteinrichtung versehen ist. In der Transporteinrichtung der Station 3b sind die Glasartikel in einer anderen Orientierung als in der Transporteinrichtung der Station 3a an den Plätzen 6b - 11b aufnehmbar. Zwischen den Stationen 3a, 3b ist eine Umsetzeinrichtung 12 angeordnet, mit der in der Stellung gemäß Fig. 2 ein Glasartikel dem Platz 6a der Transporteinrichtung der Station 3a entnommen und dem Platz 9b der Transporteinrichtung der Station 3b übergeben werden kann. Dabei wird durch die Umsetzeinrichtung 12 der Glasartikel umgedreht, z.B. ausgehend von einer aufrechten Position auf den Kopf gestellt. Auf diese Weise können an der Station 3b andere Bereiche der Glasartikel feuerpoliert werden als in der Station 3a. Beispielsweise können an der ersten Station 3a die Innenseite sowie ein oberer Bereich der Glasartikel feuerpoliert werden, während an der zweiten Station die Bodenfläche und eine äußere Mantelfläche der Glasartikel feuerpoliert werden können.

Eine Entnahmeeinrichtung 13 dient dazu, Glasartikel von der Transporteinrichtung der Station 3b zu entnehmen, die sich in der Stellung gemäß Fig. 2 am Platz 6b der Transporteinrichtung befinden. Mittes der Entnahmeeinrichtung 13 werden die entnommenen Glasartikel beispielsweise einem allen Modulkombinationen 3 gemeinsamen Förderband zum Abtransport der Glasartikel entsprechend der Ausführungsform von Fig. 1 zugeführt.

Die Funktionsweise der Vorrichtung von Fig. 2 ist wie folgt:

Jeder der parallel angeordneten Modulkombinationen 3 wird - gleichzeitig oder zeitlich versetzt - ein Glasartikel zugeführt und mittels der Beladeeinrichtung 5 einem Platz der an der ersten Station 3a angeordneten Transporteinrichtung übergeben. In der Stellung gemäß Fig. 2 ist dies der Platz 9a. An diesem Platz 9a erfolgt das Feuerpolieren des Glasartikels durch gleichzeitiges Betreiben der Mehrzahl von Brennern. Nach Ablauf einer vorbestimmten Feuerpolierzeit wird die Transporteinrichtung um die Achse A beispielsweise im Uhrzeigersinn gedreht, bis nunmehr der Platz 8a die zuvor vom Platz 9a eingenommene Stellung erreicht und zur Aufnahme eines weiteren Glasartikels sowie zum Feuerpolieren dieses weiteren Glasartikels durch die Brenner bereit ist. Während des Feuerpolierens dieses weiteren Glasartikels befindet sich der zuvor feuerpolierte Glasartikel in der Stellung, die in Fig. 2 vom Platz 11a eingenommen wird, und kühlt dort ab. Der Abkühlvorgang kann durch zusätzliche Maßnahmen wie beispielsweise Einleiten von oder Anblasen mit Gebläseluft beschleunigt werden. Wenn nach erneutem Weiterdrehen der Transporteinrichtung ein am Platz 7a angeordneter Glasartikel feuerpoliert wird, befindet sich der bereits abgekühlte Glasartikel am vom Platz 10a in Fig. 2 eingenommenen Ort, wo er weiter abkühlt bzw. abgekühlt wird. Wenn im nächsten Schritt ein am Platz 6a aufgenommener Glasartikel feuerpoliert wird, befindet sich der nunmehr weiter abgekühlte Glasartikel am vom Platz 6a in Fig. 2 eingenommenen Ort und kann, da er bereits ausreichend abgekühlt ist, ohne weitere Wartezeit von der Umsetzeinrichtung 12 dem betreffenden Platz der Transporteinrichtung der zweiten Station 3b übergeben werden.

An der Station 3b erfolgt die Bearbeitung der Glasartikel entsprechend dem vorstehend beschriebenen Vorgehen an der Station 3a, wobei die Brenner derart angeordnet sind, daß das Feuerpolieren am von Platz 9b in Fig. 2 eingenommenen Ort geschieht. Des weiteren erfolgt die Bearbeitung der Glasartikel an der Station 3b im Takt der Transporteinrichtung der Station 3a, so daß mit den erfindungsgemäßen Modulkombinationen 3 ein kontinuierlicher Feuerpolier-Betrieb aufrechterhalten werden kann. Die Umsetzeinrichtung 12 ist während des Feuerpolierens wirksam, d.h. zwischen den Weiterschalt- bzw. Weiterdrehvorgängen der Rundschaltteller.

Die Entnahme der feuerpolierten und abgekühlten Glasartikel jeweils am von Platz 6a bzw. 6b in Fig. 2 eingenommenen Ort stellt sicher, daß an die Beladeeinrichtung 5 bzw. an die Umsetzeinrichtung 12 stets ein leerer, zur Aufnahme eines Glasartikels bereiter Platz herantransportiert werden kann.

Je nach Art und Weise des Feuerpolierens kann die Zeit, die die feuerpolierten Glasartikel auf ihrem Weg zum Entnahmeplatz in der jeweiligen Transporteinrichtung 3a, 3b verbringen, für eine genügende Abkühlung ausreichen, so daß keine weiteren Maßnahmen erforderlich sind und die Glasartikel ohne Verzögerung von der Umsetzeinrichtung 12 bzw. der Entnahmeeinrichtung 13 ergriffen werden können. Es ist jedoch auch möglich, zusätzliche Kühlmaßnahmen vorzusehen und/oder die Anzahl der Plätze pro Transporteinrichtung zu erhöhen. Des weiteren kann die Anordnung der Plätze in den Transporteinrichtungen auch von einer Kreisform abweichen.

Die Brenner müssen nicht im Bereich der in Fig. 2 von den Plätzen 9a bzw. 9b eingenommenen Orte angeordnet werden. Es ist z.B. auch möglich, bei im Uhrzeigersinn weiterzudrehenden Rundschalttellern die Brenner derart anzuordnen, daß das Feuerpolieren an den Orten stattfindet, die in Fig. 2 von den Plätzen 11a bzw. 11b eingenommen werden.

## Patentansprüche

1. Vorrichtung zum Feuerpolieren von Glasartikeln,
dadurch **gekennzeichnet,**
daß eine Mehrzahl von Brennern vorgesehen ist, die aus unterschiedlichen Richtungen auf einen Glasartikel richtbar und gleichzeitig zum Feuerpolieren des Glasartikels betreibbar sind.

2. Vorrichtung nach Anspruch 1,
dadurch **gekennzeichnet,**
daß die Mehrzahl von Brennern in einem Modul oder einer Modulkombination (3) vorgesehen ist, in das mindestens ein Glasartikel gegeben werden kann, wobei insbesondere die Modulkombination (3) zwei Stationen (3a, 3b) mit jeweils mehreren Brennern für je einen Glasartikel aufweist, und/oder die Vorrichtung eine Mehrzahl von Modulen oder Modulkombinationen (3) aufweist, wobei jedes Modul bzw. jede Modulkombination (3) eine Mehrzahl von Brennern zum Feuerpolieren eines Glasartikels umfaßt, und wobei insbesondere die Mehrzahl von Modulen oder Modulkombinationen (3) parallel zueinander angeordnet sind, so daß sie jeweils direkt von einer Produktionsmaschine mit Glasartikeln beschickbar sind, ohne daß die Glasartikel zuvor andere Module oder Modulkombinationen (3) durchlaufen müssen.

3. Vorrichtung nach Anspruch 1 oder 2,
dadurch **gekennzeichnet,**
daß eine Transporteinrichtung mit mehreren jeweils zur Aufnahme zumindest eines Glasartikels dienenden Plätzen (6a - 11a, 6b - 11b) vorgesehen ist, die nacheinander in den Wirkungsbereich der Brenner bringbar sind.

4. Vorrichtung nach Anspruch 3,
dadurch **gekennzeichnet,**
daß die Plätze (6a - 11a, 6b - 11b) auf einer geschlossenen Linie, insbesondere auf einem Kreis, angeordnet sind, und/oder daß die Transporteinrichtung als Drehteller oder Rundschaltteller ausgebildet ist, und/oder daß die Transporteinrichtung zusätzlich zum Transportieren der Glasartikel zum Drehen der Glasartikel um deren eigene Achse ausgebildet ist.

5. Vorrichtung nach Anspruch 3 oder 4,
dadurch **gekennzeichnet,**
daß jedes Modul oder jede Modulkombination (3) wenigstens eine Station (3a, 3b) aufweist, an der Glasartikel mittels einer Beladeeinrichtung (5) einem Beladeplatz einer Transporteinrichtung zuführbar und mittels einer Entnahmeeinrichtung (13) einem Entnahmeplatz der Transporteinrichtung entnehmbar sind, wobei insbesondere der Beladeplatz und der Entnahmeplatz der Transporteinrichtung einander diametral gegenüberliegen.

6. Vorrichtung nach einem der Ansprüche 3 bis 5,
dadurch **gekennzeichnet,**
daß jedes Modul oder jede Modulkombination (3) wenigstens zwei Stationen (3a, 3b) aufweist, die jeweils mit einer Transporteinrichtung versehen sind und zwischen denen eine Umsetzeinrichtung (12) angeordnet ist, mit der die Glasartikel von der einen Station (3a) zur anderen Station (3b) überführbar sind, wobei insbesondere mit der Umsetzeinrichtung (12) die Orientierung der Glasartikel veränderbar ist und insbesondere die Glasartikel umdrehbar sind.

7. Vorrichtung nach einem der Ansprüche 2 bis 6,
dadurch **gekennzeichnet,**
daß ein Transportband (2) vorgesehen ist, um Glasartikel zu einem oder mehreren Modulen oder Modulkombinationen zu befördern, und/oder daß ein weiteres Transportband (4) zum Abtransport der feuerpolierten Glasartikel vorgesehen ist.

8. Verfahren zum Feuerpolieren von Glasartikeln, wobei das Verfahren die folgenden Schritte aufweist:
Befördern eines Glasartikels zu einer Mehrzahl von Brennern, die alle auf den Glasartikel gerichtet sind, wenn der Glasartikel eine vorbestimmte Position zwischen den Brennern erreicht hat;
gleichzeitiges Betreiben der Brenner, um das Feuerpolieren des Glasartikels zu erreichen; und
Befördern des Glasartikels weg von der Mehrzahl von Brennern.

9. Verfahren nach Anspruch 8, wobei das Verfahren die folgenden Schritte aufweist:
Befördern mehrerer Glasartikel zu einer Mehrzahl von parallel zueinander angeordneten Modulen oder Modulkombinationen, die jeweils eine Mehrzahl von Brennern aufweisen, welche auf den jeweiligen Glasartikel gerichtet sind, wenn der Glasartikel eine vorbestimmte Position zwischen den Brennern erreicht hat;
gleichzeitiges Betreiben aller Brenner in allen Modulen bzw. allen Modulkombinationen, um das Feuerpolieren der Glasartikel zu erreichen; und
Befördern der Glasartikel weg von der Mehrzahl von Modulen oder Modulkombinationen,
wobei insbesondere zwei Glasartikel gleichzeitig in zwei Stationen (3a, 3b) einer jeden Modulkombination feuerpoliert werden, wobei insbesondere in der ersten Station (3a) die äußere Mantelfläche eines Glasartikels sowie der obere Randbereich feuerpoliert wird, während in der zweiten Station (3b) die Bodenfläche des anderen Glasartikels feuerpoliert wird.

10. Verfahren nach Anspruch 8 oder 9,
dadurch **gekennzeichnet,**
daß jeder Glasartikel zumindest im wesentlichen unmittelbar nach Ablauf einer vorbestimmten Feuerpolierzeit aus dem Wirkungsbereich der Brenner heraus und gleichzeitig der nächste Glasartikel in den Wirkungsbereich der Brenner hinein bewegt wird, und/oder daß die Brenner ununterbrochen betrieben werden.

11. Verfahren nach Anspruch 8 oder 9,
dadurch **gekennzeichnet,**
daß der Glasartikel umgedreht auf einen Pilz aufgesteckt wird und dann alle betreffenden Bereiche gleichzeitig feuerpoliert werden.

12. Verfahren nach einem der Ansprüche 8 bis 11,
dadurch **gekennzeichnet,**
daß mehrere oder alle parallel zueinander angeordneten Module bzw. Modulkombinationen (3) gleichzeitig bestückt und gleichzeitig entladen werden.
